# EUROPEAN PATENT SPECIFICATION

(11) **EP 3 239 029 B1**
(45) Date of publication and mention of the grant of the patent: **08.05.2019**
(21) Application number: 17160075.2
(22) Date of filing: 09.03.2017
(51) Int. Cl.: B62M 6/45, B62M 6/90, B62M 9/121, B62K 11/04, B62M 6/55, B62K 19/34, B62K 25/28, B62K 25/30, F16B 5/02

(54) **ELECTRIC-MOTOR-ASSISTED BICYCLE**
ELEKTROMOTORUNTERSTÜTZTES FAHRRAD
BICYCLETTE ASSISTÉE PAR MOTEUR ÉLECTRIQUE

(30) Priority: 28.04.2016 JP 2016091470
(43) Date of publication of application: 01.11.2017
(73) Proprietor: Yamaha Hatsudoki Kabushiki Kaisha, Iwata-shi, Shizuoka 438-8501 (JP)
(72) Inventor: MANO, Yasunori, Iwata-shi, Shizuoka 438-8501 (JP)
(74) Representative: Grünecker Patent- und Rechtsanwälte PartG mbB

(56) References cited:
- WO-A1-2013/050193
- DE-A1- 4 102 455
- GB-A- 1 039 089
- JP-A- 2000 062 679
- US-A1- 2012 051 869

## Description

The present invention relates to an electric-motor-assisted bicycle according to the independent claim 1. Such an electric-motor-assisted bicycle is disclosed in JP 2000-62679 A.

Bicycles are used by many people, regardless of age and gender, as a handy transportation means. In recent years, electric-motor-assisted bicycles have become popular that add driving forces from the motor to pedaling forces from the rider to assist the rider. Such an electric-motor-assisted bicycle is disclosed in JP 2000-62679 A, for example.

The above publication describes an electric-motor-assisted bicycle that includes a drive unit. The drive unit includes a crank axle. Pedals are mounted on the crank axle by means of arms. The drive unit is attached to a bracket disposed on the bottom of the vehicle-body frame.

According to the above disclosure, the bracket includes a top plate and a pair of side plates. The side plates extend downward from the top plate. The drive unit includes a suspension boss. The suspension boss is located between the side plates. A hole is provided in each of the side plates. A bolt is inserted through the hole in one of the side plates from the outside as determined along the left-right direction with respect to the vehicle. The bolt goes through the suspension boss and is inserted through the hole provided in the other side plate from the inside as determined along the left-right direction with respect to the vehicle. A nut is attached to the tip of the bolt. Thus, the drive unit is attached to the bracket.

When a drive unit is to be attached to a bracket in the above-described manner, the suspension boss, which is part of the drive unit, must be inserted between the two side walls. In view of this, a small gap is present between each side wall and the suspension boss. When the drive unit is to be attached to the bracket in the above-described manner, tightening forces of the bolt are used to deform the side walls by the amounts of the gaps. The side plates are closely attached to the drive unit and tightened together to provide sufficient attachment strength of the drive unit with respect to the bracket.

It has been considered to increase the stiffness of the bracket on an electric-motor-assisted bicycle used under harsh conditions such as racing, with an eye to increasing the attachment strength of the drive unit with respect to the vehicle-body frame. However, a bracket with very high stiffness means that it is difficult to sufficiently deform the side plates. This makes it difficult to tightly sandwich the drive unit between the side plates. This may lead to decreased attachment strength of the drive unit with respect to the bracket.

An object of the present invention is to provide an electric-motor-assisted bicycle with the drive unit attach to the bracket in a stable manner even when the bracket has a high stiffness.

According to the present invention said object is solved by an electric-motor-assisted bicycle having the features of independent claim 1. Preferred embodiments are laid down in the dependent claims.

An electric-motor-assisted bicycle according to an embodiment includes a front wheel, a rear wheel, a vehicle-body frame, and a drive unit. The rear wheel is located rearward of the front wheel with respect to the bicycle. The vehicle-body frame supports the front wheel and the rear wheel. The drive unit is attached to the vehicle-body frame. The drive unit generates driving power to be transmitted to the rear wheel. The drive unit includes a housing and a crank axle. The crank axle extends through the housing in a left-right direction with respect to the bicycle. The vehicle-body frame includes a bracket. The drive unit is attached to the bracket. The bracket includes a top plate, a first side plate, and a second side plate. The first side plate is connected to the top plate. The second side plate is connected to the top plate. The second side plate is spaced apart from the first side plate as determined along the left-right direction with respect to the bicycle. The housing includes a first suspension boss and a second suspension boss. The first suspension boss and the second suspension boss are located between the first side plate and the second side plate as determined along the left-right direction with respect to the bicycle. A first bolt is fastened to the first suspension boss. The first bolt is inserted into a hole provided in the first side plate from an outside as determined along the left-right direction with respect to the bicycle. An insertion hole is provided in the second suspension boss. The insertion hole extends in the left-right direction with respect to the bicycle and is open toward the second side plate. The electric-motor-assisted bicycle further includes a cylindrical member. The cylindrical member is fitted into the insertion hole and is positioned to be slidable in a direction in which the insertion hole extends. A thread groove is provided on an inner periphery of the cylindrical member. The thread groove engages a thread provided on an outer periphery of a second bolt. The second bolt is inserted into a hole provided in the second side plate from the outside as determined along the left-right direction with respect to the bicycle. As the first bolt is tightened, the housing moves toward the first side plate as determined along the left-right direction with respect to the bicycle. As a result, the housing is pushed against the first side plate. As the second bolt is tightened, the cylindrical member moves in a direction from out of the insertion hole. As a result, the cylindrical member is pushed against the second side plate.

In the above-described electric-motor-assisted bicycle, the drive unit may be attached to the bracket in a stable manner even when the bracket has a high stiffness.

### BRIEF DESCRIPTION OF THE DRAWINGS

FIG. 1 is a right-side view of an electric-motor-assisted bicycle in an embodiment according to the independent claim.
FIG. 2 is a right-side view of the drive unit.
FIG. 3 is a left-side view of the drive unit.
FIG. 4 is an enlarged right-side view of the drive unit attached to the bracket.
FIG. 5 is a cross-sectional view illustrating a structure for attaching the drive unit to the bracket.
FIG. 6A is a cross-sectional view illustrating a step of the method of attaching the drive unit to the bracket, where the drive unit is positioned between the two side plates of the bracket.
FIG. 6B is a cross-sectional view illustrating another step of the method of attaching the drive unit to the bracket, where the drive unit is in contact with the left side plate as a result of the left bolt being tightened.
FIG. 6C is a cross-sectional view illustrating yet another step of the method of attaching the drive unit to the bracket, where the cylindrical member is in contact with the right side plate as a result of the right bolt being tightened.
FIG. 7 is a cross-sectional view showing an example application of the structure for attaching the drive unit to the bracket.
FIG. 8A is a cross-sectional view illustrating a step of the method of attaching the drive unit to the bracket, where the drive unit is positioned between the two side plates of the bracket and the cylindrical member is attached to the right side plate.
FIG. 8B is a cross-sectional view illustrating another step of the method of attaching the drive unit to the bracket, where the drive unit is sandwiched between the cylindrical member and left side plate.

### DESCRIPTION OF THE EMBODIMENTS

The embodiments provide a structure that improves the attachment strength of the drive unit with respect to the vehicle-body frame.

When the drive unit is to be attached to the vehicle-body frame by means of a bracket, the suspension boss of the drive unit must be inserted between the two side plates of the bracket. For this purpose, a small gap must be present between each side plate and the suspension boss.

If such gaps are present when the drive unit have been attached to the bracket, the drive unit is merely suspended by the bolt extending through the suspension boss. In this condition, it is difficult to provide sufficient attachment strength of the drive unit with respect to the bracket.

To address this problem, the bolt and a nut may be used to sandwich the drive unit between the side plates to provide sufficient attachment strength of the drive unit with respect to the bracket. More specifically, tightening forces of the bolt may be used to deform the side walls by the amounts of the gaps inwardly as determined along the left-right direction with respect to the vehicle, and the side plates are closely attached to the drive unit and tightened together. This provides sufficient attachment strength of the drive unit with respect to the bracket.

To further increase the attachment strength of the drive unit with respect to the vehicle-body frame in connection with a bracket with the above-described structure, it is considered to increase the stiffness of the bracket itself. For example, they considered adjusting the shape, material, thickness and other characteristics of the bracket to significantly increase the stiffness of the side plates. Unfortunately, this makes it difficult to tighten the side plates closely attached to the drive unit by deforming the side plates using tightening forces of the bolt. As such, it may be impossible to provide sufficient attachment strength of the drive unit with respect to the bracket.

The present embodiments provide a structure that allows the drive unit to be attached to the bracket in a stable manner even when the bracket has a high stiffness. Said embodiments are focused on the characteristics of threads.

An embodiment will be described below with reference to the drawings. The same or corresponding parts are labeled with the same characters in the drawings and their description will not be repeated.

### [Electric-Motor-Assisted Bicycle]

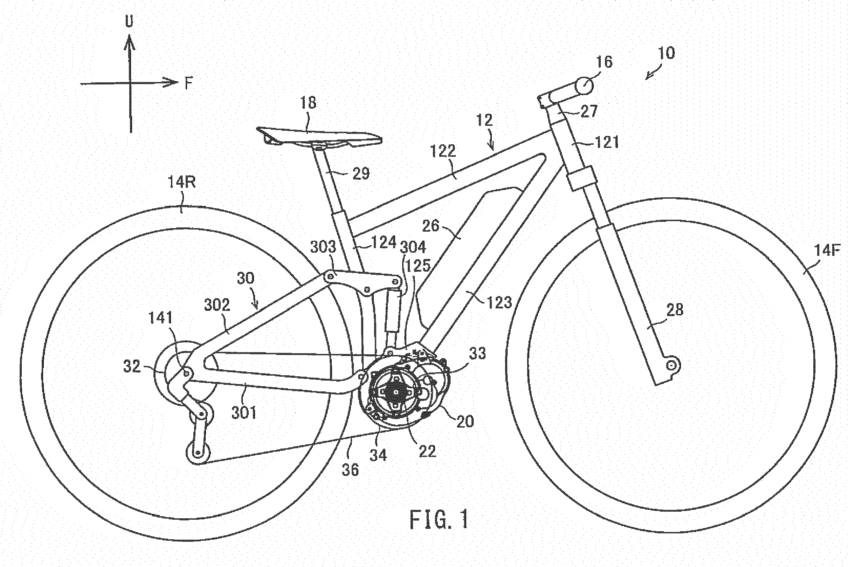

Referring to FIG. 1, an electric-motor-assisted bicycle 10 in an embodiment will be described. FIG. 1 is a schematic right-side view of the electric-motor-assisted bicycle 10.

In the following description, the directions "front/forward", "rear(ward)", "left", "right", "top/upward" and "bottom/downward" mean directions as perceived by a rider sitting on the saddle 18 of the electric-motor-assisted bicycle 10. In the drawings referred to in the following description, arrow "F" indicates the forward direction with respect to the vehicle; arrow "U" indicates the upward direction with respect to the vehicle; arrow "L" indicates the left direction with respect to the vehicle; and arrow "R" indicates the right direction with respect to the vehicle.

The electric-motor-assisted bicycle 10 includes a vehicle-body frame 12, a front wheel 14F, a rear wheel 14R, handlebars 16, a saddle 18, a drive unit 20, and a battery unit 26.

The vehicle-body frame 12 includes a head tube 121, a top tube 122, a down tube 123, a seat tube 124 and a bracket 125.

The head tube 121 is located at the front of the vehicle-body frame 12 and extends in a top/bottom direction. A stem 27 is inserted into the head tube 121 such that the stem is rotatable. Handlebars 16 are fixed to the top end of the stem 27. A front fork 28 is fixed to the bottom end of the stem 27. The front wheel 14F is rotatably attached to the bottom end of the front fork 28. That is, the front wheel 14F is supported by the vehicle-body frame 12 with the stem 27 and front fork 28 provided in between.

The top tube 122 is located rearward of the head tube 121 and extends in the front/rear direction. The front end of the top tube 122 is connected to the head tube 121. The rear end of the top tube 122 is connected to the seat tube 124.

The down tube 123 is located rearward of the head tube 121 and extends in the front/rear direction. The down tube 123 is located below the top tube 122. The front end of the down tube 123 is connected to the head tube 121. In the present embodiment, the front end of the down tube 123 is also connected to the front end of the top tube 122. The rear end of the down tube 123 is connected to the bracket 125.

The battery unit 26 is attached to the down tube 123. The battery unit 26 supplies the drive unit 20 with electric power. The battery unit 26 includes a battery and a controller. The battery is a chargeable/dischargeable battery. The controller controls the battery to be charged or discharged, and monitors battery output current, remaining battery level, and other parameters.

The seat tube 124 is located rearward of the top tube 122 and down tube 123 and extends in the top/bottom direction. The bottom end of the seat tube 124 is connected to the bracket 125. In other words, the seat tube 124 extends upwardly from the bracket 125.

The seat tube 124 is bent at the center as measured in the top/bottom direction. As such, the lower portion of the seat tube 124 extends in the top/bottom direction while the upper portion of the seat tube 124 extends in a direction angled relative to the top/bottom direction.

The seatpost 29 is inserted into the seat tube 124. The saddle 18 is attached to the top end of the seatpost 29.

The bracket 125 is located at the bottom of the vehicle-body frame 12. The bracket 125 supports the drive unit 20. The drive unit 20 generates driving forces to be transmitted to the rear wheel 14R which is located rearward of the front wheel 14F. The bracket 125 and drive unit 20 will be described in detail further below.

The vehicle-body frame 12 further includes a swingarm 30, a pair of connecting arms 303 and a suspension 304. The swingarm 30 includes a pair of chain stays 301 and a pair of seat stays 302.

The chain stays 301 extend in the front/rear direction. The chain stays 301 are arranged in the left/right direction. The rear wheel 14R is located between the chain stays 301. The chain stays 301 are positioned to be mirror images of each other. In view of this, only the right chain stay 301 is shown in FIG. 1.

The front end of each of the chain stays 301 is attached to the bracket 125. That is, the chain stays 301 extend rearwardly from the bracket 125. The chain stays 301 are positioned such that they are capable of swinging relative to the bracket 125 about an axis that extends in the left/right direction.

The axle 141 of the rear wheel 14R is attached to the rear ends of the chain stays 301 such that the axle cannot rotate. That is, the rear wheel 14R is supported on the chain stays 301 such that the rear wheel is capable of rotating about the axle 141. In short, the rear wheel 14R is supported by the vehicle-body frame 12. A multi-stage driven sprocket 32 is fixed to the rear wheel 14R.

The seat stays 302 extend in the front/rear direction. The seat stays 302 are arranged in the left/right direction. The rear wheel 14R is located between the seat stays 302. The seat stays 302 are positioned to be mirror images of each other. In view of this, only the right seat stay 302 is shown in FIG. 1.

The rear end of the left seat stay 302 is connected to the rear end of the left chain stay 301. The rear end of the right seat stay 302 is connected to the rear end of the right chain stay 301.

The connecting arms 303 extend in the front/rear direction. The connecting arms 303 are arranged in the left/right direction. The seat tube 124 is located between the connecting arms 303. The connecting arms 303 are positioned to be mirror images of each other. In view of this, only the right connecting arm 303 is shown in FIG. 1.

The connecting arms 303 are attached to the seat tube 124. The connecting arms 303 are positioned to be capable of swinging relative to the seat tube 124 about an axis that extends in the left/right direction.

As viewed from a side of the vehicle, the front ends of the connecting arms 303 are located forward of the seat tube 124. As viewed from a side of the vehicle, the rear ends of the connecting arms 303 are located rearward of the seat tube 124.

The rear end of the left connecting arm 303 is attached to the front end of the left seat stay 302. The left connecting arm 303 is positioned to be capable of swinging relative to the left seat stay 302 about an axis that extends in the left/right direction.

The rear end of the right connecting arm 303 is attached to the front end of the right seat stay 302. The right connecting arm 303 is positioned to be capable of swinging relative to the right seat stay 302 about an axis that extends in the left/right direction.

The suspension 304 is located forward of the seat tube 124 and rearward of the down tube 123. The top end of the suspension 304 is attached to the connecting arms 303. The suspension 304 is positioned to be capable of swinging relative to the connecting arms 303 about an axis that extends in the left/right direction. The bottom end of the suspension 304 is attached to the bracket 125. The suspension 304 is positioned to be capable of swinging relative to the bracket 125 about an axis that extends in the left/right direction. The suspension 304 is attached to the bracket 125 at a position that is forward of the position at which the seat tube 124 is attached to the bracket 125.

A driving sprocket 34 is attached to the drive unit 20 with a support member 33 provided in between. A chain 36 is wound about the driving sprocket 34 and driven sprocket 32.

Although not shown, a crankarm is attached to each of the ends of the crank axle 22, as measured in the axial direction, included in the drive unit 20. A pedal is attached to each of the crankarms.

### [Drive Unit]

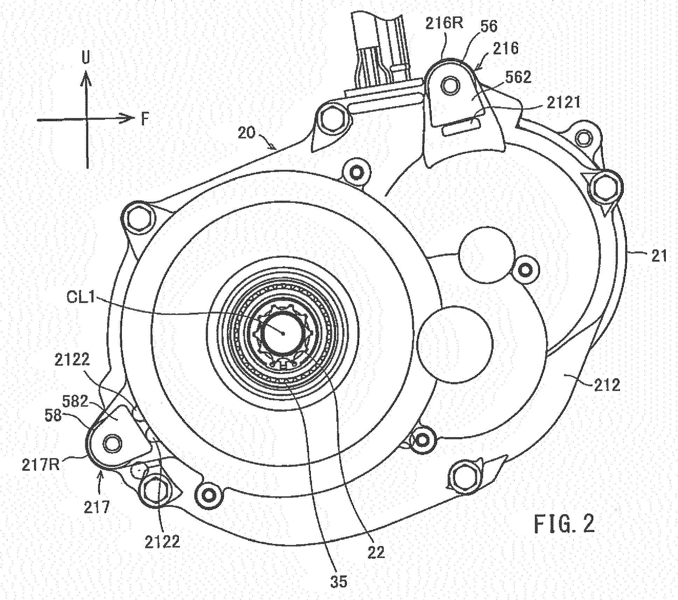

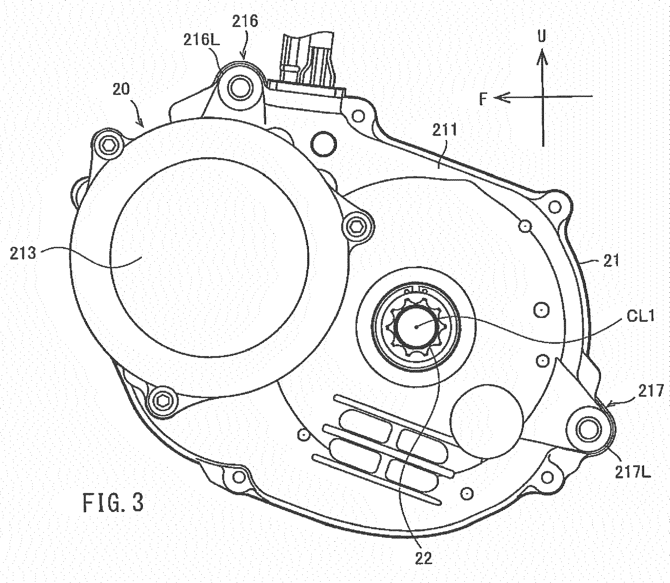

The drive unit 20 will be described with reference to FIGS. 2 and 3. FIG. 2 is a right-side view of the drive unit 20. FIG. 3 is a left-side view of the drive unit 20.

The drive unit 20 includes a housing 21 and a crank axle 22. These components will be described below.

The housing 21 is fixed to the bracket 125. The housing 21 includes a housing member 211, a housing member 212 and a cover 213. The housing members 211 and 212 and cover 213 are made of a metal material. The metal material may be an aluminum alloy, for example.

The housing member 211 is laid over the housing member 212 from the left as measured in the left/right direction. Then, the housing member 211 is fixed to the housing member 212 by means of a plurality of fasteners. As a result, a space is defined by the housing members 211 and 212. A reduction gear for reducing the speed of the rotation of the motor is housed in this space.

The cover 213 is laid over the housing member 211 from the left as measured in the left/right direction. Then, the cover 213 is fixed to the housing member 211 by means of a plurality of fasteners. As a result, a space is defined by the cover 213 outside the housing member 211 (i.e. to the left thereof). The motor is housed in this space.

The crank axle 22 extends through the housing 21 in the left/right direction. The crank axle 22 is supported on the housing 21 such that the crank axle is rotatable about the central axis CL1 of the crank axle 22.

In the drive unit 20, human power provided to the crank axle 22 and motor drive power depending on the magnitude of the human power are provided to the resultant-force output axle 35 and transmitted to the driving sprocket 34 (see FIG. 1) via the support member 33. The drive power transmitted to the driving sprocket 34 is transmitted to the driven sprocket 32 (see FIG. 1) via the chain 36 (see FIG. 1). The drive power transmitted to the driven sprocket 32 rotates the rear wheel 14R. That is, the drive unit 20 generates driving power to be transmitted to the rear wheel 14R. The electric-motor-assisted bicycle 10 assists the rider by adding drive power from the motor to tread forces of the rider.

### [Structure for Attaching Drive Unit to Bracket]

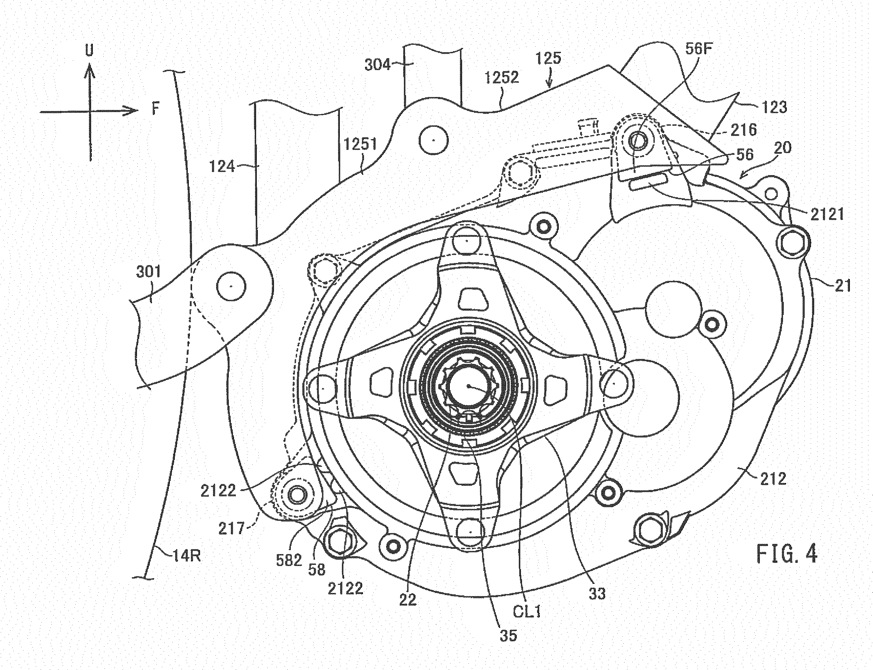

A structure for attaching the drive unit 20 to the bracket 125 will be described with reference to FIG. 4. FIG. 4 is an enlarged right-side view of the drive unit 20 shown in FIG. 2 as attached to the bracket 125. In FIG. 4, the support member 33 is attached to the resultant-force output axle 35.

### [Bracket]

The bracket 125 includes a pair of side plates 1251, one to the left and the other to the right. The side plates 1251 extend in the front-to-rear direction and in the top-to-down direction. The side plates 1251 are arranged in the left-right direction. The left and right side plates 1251 are mirror images of each other. In view of this, FIG. 4 only shows the right side plate 1251.

The bottom end of the suspension 304 is swingably attached to the side plates 1251. The front ends of the chain stays 301 are swingably attached to the side plates 1251. The bottom end of the suspension 304 is located forward of and higher than the front ends of the chain stays 301.

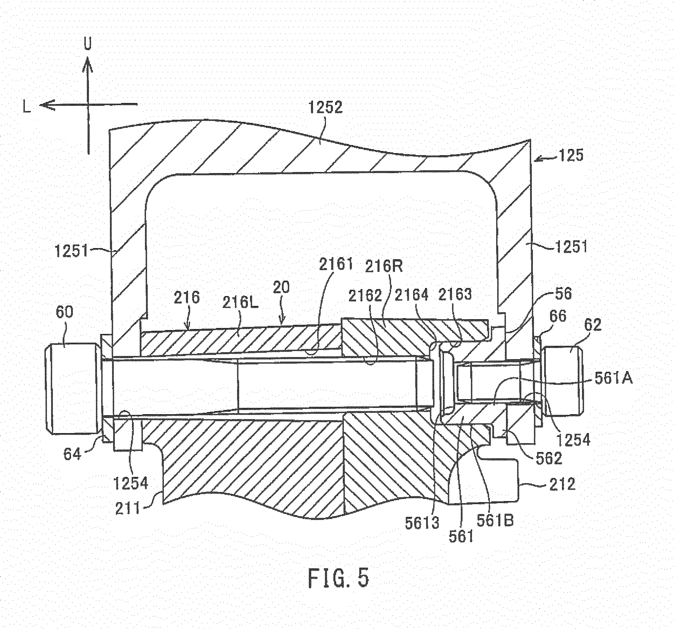

As shown in FIG. 5, the bracket 125 further includes a top plate 1252. The top plate 1252 connects the side plates 1251.

The left side plate 1251 extends from the left edge of the top plate 1252. The left side plate 1251 extends toward the drive unit 20.

The right side plate 1251 extends from the right edge of the top plate 1252. The right side plate 1251 extends toward the drive unit 20.

Although not shown in FIG. 5, the bottom end of the seat tube 124 and the bottom end of the down tube 123 are connected to the top plate 1252.

### [Attachment Portions of the Drive Unit]

The two attachment portions 216 and 217 included in the drive unit 20 will be described with reference to FIGS. 2 and 3. The two attachment portions 216 and 217 are used to attach the drive unit 20 to the bracket 125.

The attachment portion 216 is provided on the housing 21. The attachment portion 216 protrudes from the outer surface of housing 21. The attachment portion 216 is located forward of and higher than the crank axle 22.

The attachment portion 216 includes a boss 216L and a boss 216R. The attachment portion 216 will be described in detail below with reference to FIG. 5.

The boss 216L is provided on the housing member 211. The boss 216L protrudes from the outer surface of the housing member 211.

A hole 2161 is provided in the boss 216L. The hole 2161 extends in the left-right direction through the boss 216L.

The boss 216R is provided on the housing member 212. The boss 216R protrudes from the outer surface of the housing member 212.

The boss 216R includes a threaded hole 2162 and an insertion hole 2163. The insertion hole 2163 is coaxial with the threaded hole 2162 and extends straight in the left-right direction with a generally constant diameter. The diameter of the insertion hole 2163 is larger than that of the threaded hole 2162. The threaded hole 2162 is located closer to the boss 216L than the insertion hole 2163 is as measured in the left-right direction. The right end of the threaded hole 2162 (i.e. furthermost position thereon in the second axial direction) is connected to the left end of the insertion hole 2163 (i.e. furthermost position thereon in the first axial direction) via a stepped surface 2164. The stepped surface 2164 continually extends over the entire circumference about the central axis of the threaded hole 2162. That is, the stepped surface 2164 is annular in shape.

When the housing member 211 has been attached to the housing member 212, the hole 2161 and the threaded hole 2162 and insertion hole 2163 are coaxial. A cylindrical member 56 is lightly press-fitted into the insertion hole 2163 to serve as a fitting. The cylindrical member 56 includes a body 561 and a flange 562.

The body 561 is inserted into the insertion hole 2163. The body 561 is cylindrical in shape. That is, the body 561 includes a cylindrical inner periphery 561A and a cylindrical outer periphery 561B. In other words, the body 561 includes a hole defined by the inner periphery 561A.

The inner periphery 561A extends straight in the left-right direction (i.e. axial direction) of the body 561 with a generally constant diameter. A thread groove is provided on the inner periphery 561A. That is, the body 561 has a threaded hole.

The outer periphery 561B extends straight in the axial direction (i.e. left-right direction) of the body 561 with a generally constant diameter. The outer periphery 561B is in contact with the inner surface of the insertion hole 2163.

A recess 5613 is provided on the left end of the body 561 (i.e. furthermost position thereon in the first axial direction). The recess 5613 is coaxial with the inner periphery 561A. The left end of the inner periphery 561A (furthermost position thereon in the first axial direction) is connected to the inner surface of the recess 5613. That is, the hole defined by the inner periphery 561A (i.e. hole of the body 561) is open on the inner surface of the recess 5613.

The flange 562 extends outward in radial directions of the body 561 from the right end of the body 561 (i.e. furthermost point thereon in the second axial direction). The flange 562 has a circumferential portion having a different length measured from the outer periphery 561B of the body 561 (i.e. radial dimension). That is, as shown in FIG. 2, the flange 562 is not circular in shape as viewed in an axial direction of the body 561. In short, the flange 562 is a deformed flange.

As shown in FIG. 2, the flange 562 is in contact with a protrusion 2121 formed on the housing member 212. This prevents the cylindrical member 56 from rotating in a circumferential direction.

Returning to FIGS. 2 and 3, the attachment portion 217 is provided on the housing 21. The attachment portion 217 protrudes from the outer surface of the housing 21. The attachment portion 217 is located rearward of and lower than the crank axle 22. The attachment portion 217 is located rearward of and lower than the attachment portion 216.

The attachment portion 217 has the same construction as the attachment portion 216 (see FIG. 5). That is, similar to the attachment portion 216, the attachment portion 217 includes a boss 217L (see FIG. 3) provided on the housing member 211 and a boss 217R (see FIG. 2) provided on the housing member 212. Similar to the boss 216L, the boss 217L has a hole. Similar to the boss 216R, the boss 217R has a threaded hole and an insertion hole. As shown in FIG. 2, a cylindrical member 58 is lightly press-fitted into the insertion hole. The cylindrical member 58 has a shape similar to that of the cylindrical member 56. The flange 582 of the cylindrical member 58 is in contact with the protrusion 2122 formed on the housing member 212. This prevents the cylindrical member 58 from rotating in a circumferential direction.

As discussed above, the attachment portion 217 has the same construction as the attachment portion 216 (see FIG. 5). In view of this, the attachment portion 217 will not be described in detail.

When the housing member 211 has been attached to the housing member 212, the hole in the boss 217L and the threaded hole and insertion hole in the boss 217R are coaxial.

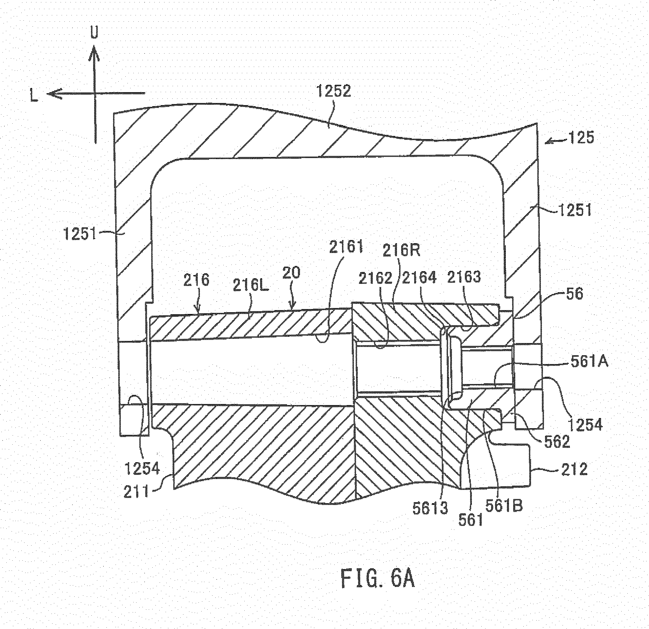

How to attach the attachment portion 216 to the bracket 125 will be described with reference to FIGS. 6A to 6C. How to attach the attachment portion 217 to the bracket 125 will not be described in detail since it is the same as how to attach the attachment portion 216 to the bracket 125.

First, as shown in FIG. 6A, the attachment portion 216 is positioned between the side plates 1251. In this state, part of each of the side plates 1251 overlaps the attachment portion 216 as viewed in a left-right direction. The holes 1254 in the side plates 1251 are coaxial with the hole 2161, threaded hole 2162 and insertion hole 2163 of the attachment portion 216. The cylindrical member 56 is lightly press-fitted into the insertion hole 2163. A gap is present between the left side plate 1251 and attachment portion 216 (or boss 216L) and between the right side plate 1251 and cylindrical portion 56. FIG. 6A shows a state where the right side plate 1251 is in contact with the cylindrical member 56 to illustrate the presence of the gap between the left side plate 1251 and attachment portion 216 (or boss 216L).

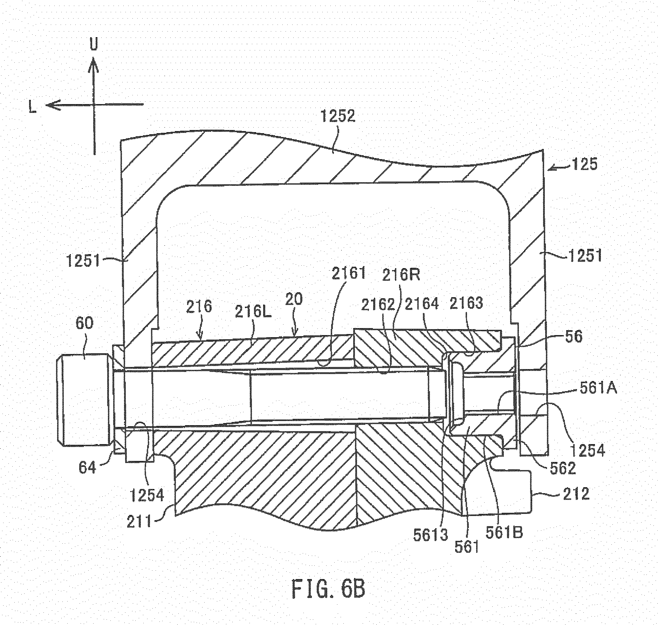

Subsequently, a (first) bolt 60 (see FIG. 5) is inserted from the left (i.e. from the outside) into the hole 1254 in the left side plate 1251. At this moment, the bolt 60 is inserted through a washer 64 (see FIG. 5) located to the left (i.e. outward) of the left side plate 1251. After being inserted into the hole 1254, the bolt 60 is inserted into the hole 2161 of the attachment portion 216. At this moment, the thread on the outer periphery of the bolt 60 engages a thread groove in the threaded hole 2162. As the bolt 60 is tightened, the attachment portion 216, i.e. drive unit 20 is moved toward the left side plate 1251 by the associated gap. As a result, as shown in FIG. 6B, the attachment portion 216 (or boss 216L) contacts the left side plate 1251. When the bolt 60 is further tightened, the left side plate 1251 is tightly sandwiched between the attachment portion 216 (or boss 216L) and washer 64 (or head of the bolt 60). In this state, a gap is present between the right side plate 1251 and cylindrical member 56, as shown in FIG. 6B.

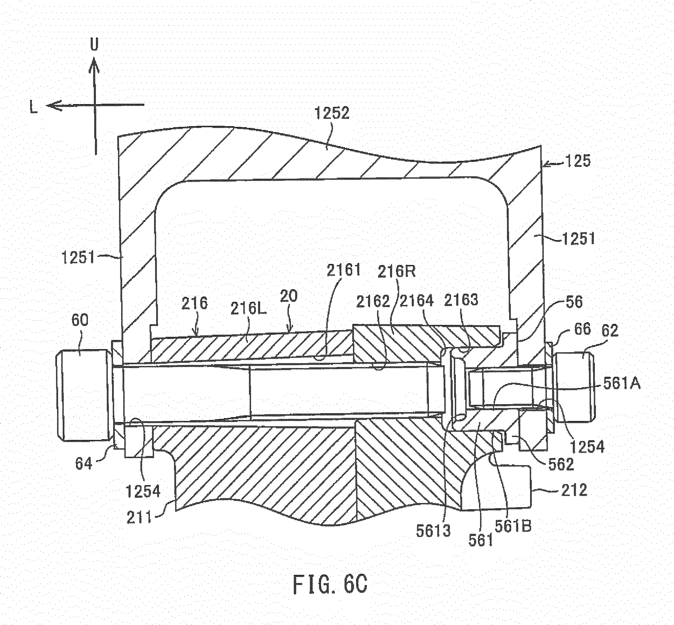

Subsequently, a (second) bolt 62 (see FIG. 5) is inserted from the right (i.e. from the outside) into the hole 1254 in the right side plate 1251. At this moment, the bolt 62 is inserted through a washer 66 (see FIG. 5) located to the right (i.e. outward) of the right side plate 1251. After being inserted into the hole 1254, the bolt 62 is inserted into the cylindrical member 56. At this moment, the thread on the outer periphery of the bolt 62 engages the thread groove on the inner periphery 561A of the cylindrical member 56. As the bolt 62 is tightened, the cylindrical member 56, which has been lightly press-fitted into the insertion hole 2163, is drawn out against the friction toward the right (i.e. in a direction from out of the insertion hole 2163) by the above-mentioned gap. As a result, the cylindrical member 56 is in contact with the right side plate 1251, as shown in FIG. 6C. When the bolt 62 is further tightened, the right side plate 1251 is tightly sandwiched by the cylindrical member 56 and washer 66 (or head of the bolt 62).

As will be apparent from the above description, according to the present embodiment, the boss 216L and the portions of the boss 216R that have the threaded hole 2162 implement the first suspension boss. Further, according to the present embodiment, the portions of the boss 216R that have the insertion hole 2163 implement the second suspension boss.

In the electric-motor-assisted bicycle 10, the drive unit 20 is attached to the bracket 125 as discussed above. Tightening the bolt 62 moves the cylindrical member 56 toward the right. The distance between the right end surface of the cylindrical member 56 and the left end surface of the attachment portion 216 (or boss 216L) (i.e. dimension as measured in the left-right direction) can be adjusted depending on the distance between the side plates 1251 (i.e. separation as measured in the left-right direction). Thus, when the drive unit 20 is attached to the bracket 125, it is not necessary to deform each of the side plates 1251. This makes it possible to attach the drive unit 20 to the bracket 125 in a stable manner even when the bracket 125 has a high stiffness.

In the electric-motor-assisted bicycle 10, the outer diameter of the body 561 of the cylindrical member 56 is larger than the diameter of the threaded hole 2162. This makes it possible to increase the contact surface of the cylindrical member 56 with respect to the right side plate 1251. Thus, the drive unit 20 can be attached to the bracket 125 in a more stable manner.

Since the outer diameter of the body 561 of the cylindrical member 56 is sufficiently larger than the diameter of the threaded hole 2162, the cross-sectional area of the cylindrical member 56 as measured along directions perpendicular to the central axis thereof is increased. This will provide a sufficient strength for the cylindrical member 56 against external forces applied thereto.

In the electric-motor-assisted bicycle 10, the flange 562 on the right end of the body 561 (i.e. furthermost point thereon in the second axial direction) is in contact with the right side plate 1251. The contact area of the cylindrical member 56 with respect to the right side plate 1251 can be further increased. Thus, the drive unit 20 can be attached to the bracket 125 in a more stable manner.

### [Example Application of Structure for Attaching Drive Unit to Bracket]

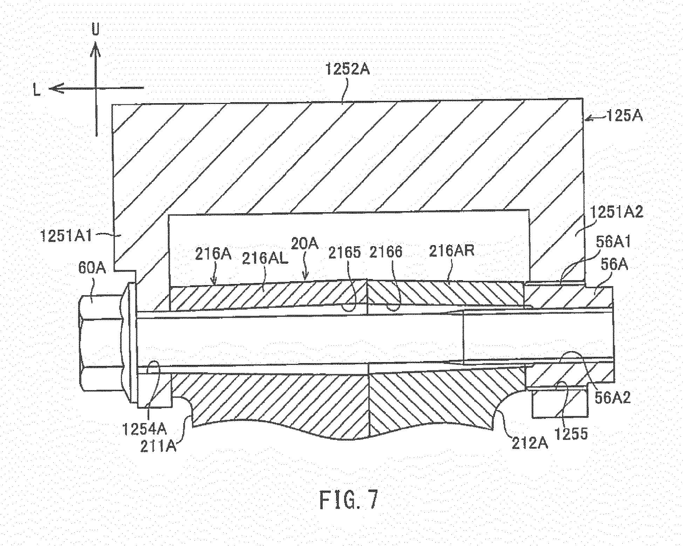

Alternatively, the structure shown in FIG. 7 that is not covered by the independent claim may be used. The structure for attaching a drive unit 20A to a bracket 125A may be described with reference to FIG. 7.

The drive unit 20A is only different from the drive unit 20 discussed above in terms of the construction of the attachment portions. The drive unit 20A includes an attachment portion 216A. The attachment portion 216A includes a boss 216AL and a boss 216AR. A hole 2165 is provided in the boss 216AL. A hole 2166 is provided in the boss 216AR.

The bracket 125A includes left and right side plates 1251A1, 1251A2 and a top plate 1252A. A hole 1254A is provided in the left side plate 1251A1. A threaded hole 1255 is formed in the right side plate 1251A2. A left-hand thread groove is provided on the threaded hole 1255.

A cylindrical member 56A is inserted through the threaded hole 1255. The cylindrical member 56A is cylindrical in shape. That is, the cylindrical member 56A includes a cylindrical outer periphery 56A1 and a cylindrical inner periphery 56A2.

The outer periphery 56A1 has a thread adapted to engage the thread groove on the threaded hole 1255. That is, the thread on the outer periphery 56A1 is a left-hand thread. When the cylindrical member 56A has been inserted through the threaded hole 1255, the thread on the outer periphery 56A1 engages the thread groove on the threaded hole 1255. That is, the cylindrical member 56A is inserted through the threaded hole 1255 and attached to the right side plate 1251A2.

A right-hand thread groove is provided on the inner periphery 56A2. That is, the cylindrical member 56A has a threaded hole.

A bolt 60A is used to attach the drive unit 20A to the bracket 125A. The bolt 60A is inserted from the left into the attachment portion 216A. At this moment, the bolt 60A is inserted through the hole 1254A in the left side plate 1251A1. The thread on the bolt 60A engages the thread groove on the inner periphery 56A2 of the cylindrical member 56A. That is, the thread on the bolt 60A is a right-hand thread.

Although not shown, the drive unit 20A includes an attachment portion 217A in lieu of the attachment portion 217 (see FIG. 2). The attachment portion 217A will not be shown or described in detail since it has the same construction as the attachment portion 216A.

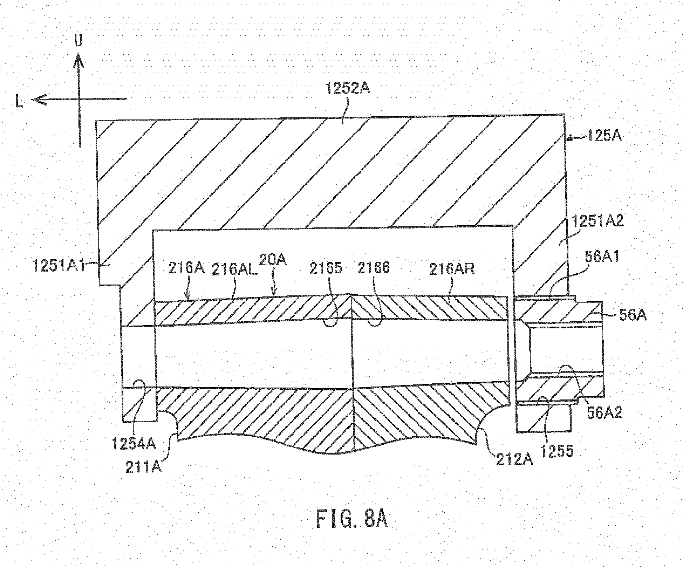

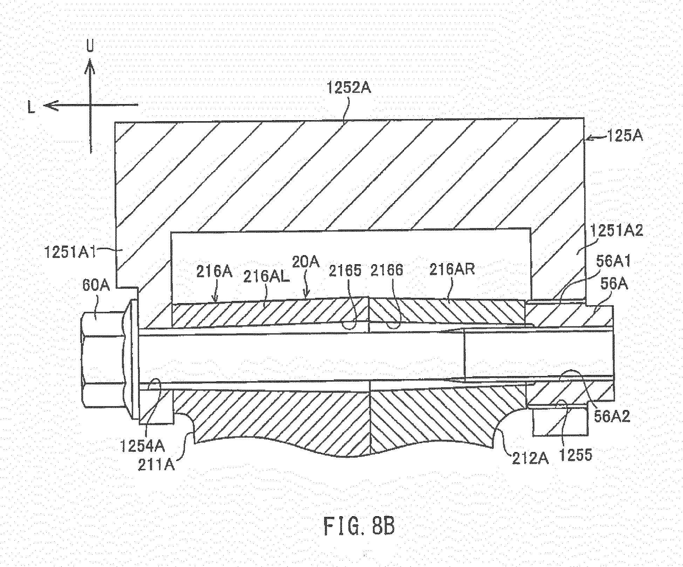

How to attach the attachment portion 216A to the bracket 125A will be described with reference to FIGS. 8A and 8B.

First, as shown in FIG. 8A, the attachment portion 216 is positioned between the left and right side plates 1251A1 and 1251A2. In this state, part of each of the left and right side plates 1251A1 and 1251A2 overlaps the attachment portion 216A as viewed in a left-right direction. The hole 1254A in the left side plate 1251A1 and the threaded hole 1255 in the right side plate 1251A2 are coaxial with the holes 2165 and 2166 of the attachment portion 216A. A gap is present between the left side plate 1251A1 and attachment portion 216A (boss 216AL) and between the right side plate 1251A2 and attachment portion 216A (boss 216AR). FIG. 8A shows a state where the left side plate 1251A1 is in contact with the attachment portion 216A (boss 216AL) to illustrate that a gap is present between the right side plate 1251A2 (more specifically, cylindrical member 56A attached to the right side plate 1251A2) and the attachment portion 216A (or boss 216AR).

Subsequently, the bolt 60A (see FIG. 7) is inserted from the left (i.e. from the outside) into the hole 1254A in the left side plate 1251A1. After being inserted into the hole 1254A, the bolt 60A is inserted into the hole 2165 and then hole 2166 of the attachment portion 216A. After being inserted into the holes 2165 and 2166, the bolt 60A is inserted into the cylindrical member 56A. Then, the bolt 60A is rotated a predetermined amount in the right-hand thread direction such that the thread on the outer periphery of the bolt 60A reaches the midpoint of the length of the thread groove on the inner periphery 56A2 of the cylindrical member 56A while engaging the thread groove.

Subsequently, the cylindrical member 56A is rotated in the left-hand thread direction. This moves the cylindrical member 56A toward the attachment portion 216A. When the cylindrical member 56A is rotated in the left-hand thread direction, the cylindrical member 56A rotates relative to the bolt 60A in the counter-right-hand thread direction, i.e. in the direction that causes the bolt 60A to move out of the cylindrical member 56A. If the bolt 60A is not restricted from rotating, bolt 60A only co-rotates with the cylindrical member 56A. If the bolt 60A is restricted from rotating, the rotation of the cylindrical member 56A in the left-hand thread direction urges the bolt 60A to move out of the cylindrical member 56A; however, since the amount of movement is small, the bolt 60A does not move completely out of the cylindrical member 56A.

When the cylindrical member 56A moves toward the attachment portion 216A, the cylindrical member 56A contacts the attachment portion 216A (or boss 216AR). When the cylindrical member 56A is further rotated, the cylindrical member 56A moves toward the left side plate 1251A1 while pushing the attachment portion 216A. As a result, with the cylindrical member 56A in contact with the attachment portion 216A (or boss 216AR), the attachment portion 216A (or boss 216AL) contacts the left side plate 1251A1, as shown in FIG. 8B.

Then, when the bolt 60A is further tightened, that is, when the bolt 60A is further tightened in the right-hand thread direction, the cylindrical member 56A is further tightened in the left-hand thread direction. Thus, the attachment portion 216A is sandwiched between the left side plate 1251A1 and cylinder member 56A. Further, the left side plate 1251A1 is tightly sandwiched by the head of the bolt 60A and attachment portion 216A. As a result, the drive unit 20A is attached to the bracket 125A in a stable manner.

The drive unit 20A is attached to the bracket 125A in the above-described manner. The distance between the cylindrical member 56A attached to the right side plate 1251A2 and the left side plate 1251A1 (i.e. distance as measured in the left-right direction) can be adjusted depending on the attachment portion 216A of the drive unit 20A. This removes the necessity for deforming each of the left and right side plates 1251A1 and 1251A2 when the drive unit 20A is to be attached to the bracket 125A. As a result, the drive unit 20A can be attached to the bracket 125A in a stable manner even if the bracket 125A has a high rigidity.

The above embodiment describes an implementation where the chain stays 301 are swingably attached to the bracket 125; alternatively, the chain stays 301 may be fixed to the bracket 125.

According to the above-illustrated embodiment, the electric-motor-assisted bicycle 10 includes the suspension 304; alternatively, it need not include the suspension 304.

The construction of the drive unit is not limited to a particular one. For example, it may be a type that combines human power (i.e. pedaling forces) and motor drive power into a resultant force, or may be a type that transmits motor drive power via an auxiliary sprocket provided on the shaft of the reduction gear and adds it to a midpoint along a chain wound around the driving sprocket and driven sprocket.

For example, in the drive unit 20, the threaded hole 2162 need not be coaxial with the insertion hole 2163. The threaded hole 2162 need not be connected to the insertion hole 2163. The threaded hole 2162 may be provided in the boss 216L. The boss 216L need not be located at the same position as the boss 216R as viewed in a left-right direction. The separate left and right housing members may be replaced by an integral housing. In such implementations, the bolt 60 and the boss through which the bolt is inserted may have small lengths. A thread provided on the bolt 60 may engage a thread groove provided on a threaded hole in a separate nut. In such implementations, the separate nut may be attached to the housing 21 in advance and then be screwed onto the bolt 60, or may be screwed onto the bolt 60 while outside the housing 21.

## Claims

1. An electric-motor-assisted bicycle, comprising:
a front wheel (14F);
a rear wheel (14R) located rearward of the front wheel (14F) with respect to the bicycle;
a vehicle-body frame (12) for supporting the front wheel (14F) and the rear wheel (14R);
and a drive unit (20) attached to the vehicle-body frame (12) for generating driving power to be transmitted to the rear wheel (14R),
the drive unit (20) including:
a housing (21); and
a crank axle (22) extending through the housing (21) in a left-right direction with respect to the bicycle,
the vehicle-body frame (12) including a bracket (125), the drive unit (20) being attached to the bracket (125),
the bracket (125) including:
a top plate (1252);
a first side plate (1251) connected to the top plate (1252); and
a second side plate (1251) connected to the top plate (1252), the second side plate (1251) being spaced apart from the first side plate (1251) as determined along the left-right direction with respect to the bicycle, **characterised in that** n the housing (21) includes a first suspension boss (216L, 216R, 2162) and a second suspension boss (216R, 2163) located between the first side plate (1251) and the second side plate (1251) as determined along the left-right direction with respect to the bicycle,
a first bolt (60) being fastened to the first suspension boss (216L, 216R, 2162), the first bolt (60) being inserted into a hole (1254) provided in the first side plate (1251) from an outside as determined along the left-right direction with respect to the bicycle,
an insertion hole (2163) being provided in the second suspension boss (216R, 2163), the insertion hole (2163) extending in the left-right direction with respect to the bicycle and being open toward the second side plate (1251),
a second bolt (62) being inserted into a hole (1254) provided in the second side plate (1251) from the outside as determined along the left-right direction with respect to the bicycle.
wherein, as the first bolt (60) is tightened, the housing (21) moves toward the first side plate (1251) as determined along the left-right direction with respect to the bicycle such that the housing (21) is pushed against the first side plate (1251),
the electric-motor-assisted bicycle further comprising a cylindrical member (56), the cylindrical member (56) being fitted into the insertion hole (2163) and positioned to be slidable in a direction in which the insertion hole (2163) extends,
a thread groove being provided on an inner periphery (561A) of the cylindrical member (56), the thread groove being adapted to engage a thread provided on an outer periphery of the second bolt (62), wherein, as the second bolt (62) is tightened, the cylindrical member (56) moves in a direction from out of the insertion hole (2163) such that the cylindrical member (56) is pushed against the second side plate (1251).

2. An electric-motor-assisted bicycle according to claim 1, **characterized in that** the housing (21) includes:
a first housing member (211); and
a second housing member (212) located closer to the second side plate (1251) than the first housing member (211) is, the second housing member (212) being attached to the first housing member (211),
the first suspension boss (216L, 216R, 2162) is located over the first and second housing members (211, 212), and
the second suspension boss (216R, 2163) is located on the second housing member (212).

3. An electric-motor-assisted bicycle according to claim 1, **characterized in that** the housing (21) includes:
a first housing member (211); and
a second housing member (212) located closer to the second side plate (1251) than the first housing member (211) is, the second housing member (212) being attached to the first housing member (211),
the first suspension boss (216L, 216R, 2162) is located on the first housing member (211), and
the second suspension boss (216R, 2163) is located on the second housing member (212).

4. An electric-motor-assisted bicycle according to any one of claims 1 to 3, **characterized in that** the first bolt (60) is fastened to the first suspension boss (216L, 216R, 2162) by means of a threaded hole (2162) provided in the first suspension boss (216L, 216R, 2162).

5. An electric-motor-assisted bicycle according to any one of claims 1 to 3, **characterized in that** the first bolt (60) is fastened to the first suspension boss (216L, 216R, 2162) by means of a nut.

6. An electric-motor-assisted bicycle according to any one of claims 1 to 5, **characterized in that** the first bolt (60) is coaxial with the insertion hole (2163).

7. An electric-motor-assisted bicycle according to any one of claims 1 to 6, **characterized in that** each of the insertion hole (2163) and the cylindrical member (56) has a larger diameter than a stem of the first bolt (60).

8. An electric-motor-assisted bicycle according to any one of claims 1 to 7, **characterized in that** the cylindrical member (56) includes:
a body (561) inserted into the insertion hole (2163); and
a flange (562) provided on an end of the body (561) as determined along an axial direction thereof and extending from an outer periphery of the body (561) in a direction perpendicular to the axial direction of the body (561), and
the flange (562) is pushed against the second side plate (1251).

9. An electric-motor-assisted bicycle according to claim 8, **characterized in that** the housing (21) includes a protrusion (2121) for contacting the flange (562) such that the protrusion (2121) and flange (562) are arranged in a circumferential direction of the cylindrical member (56) to prevent rotation of the cylindrical member (56).

## Patentansprüche

1. Ein elektro-motor-unterstütztes Fahrrad, das umfasst:
ein Vorder-Rad (14F);
ein Hinter-Rad (14R), das mit Bezug auf das Fahrrad hinter dem Vorder-Rad (14F) angeordnet ist;
einen Fahrzeug-Körper-Rahmen (12), zum Lagern des Vorder-Rads (14F) und des Hinter-Rads (14R);
einer Antriebs-Einheit (20), die an dem Fahrzeug-Körper-Rahmen (12) angebracht ist,
zum Erzeugen einer Antriebs-Leistung, die zu dem Hinter-Rad (14R) zu übertragen ist,
die Antriebs-Einheit (20) beinhaltet:
ein Gehäuse (21); und
eine Kurbel-Achse (22), die sich durch das Gehäuse (21) in einer Links-Rechts-Richtung mit Bezug auf das Fahrrad erstreckt,
der Fahrzeug-Körper-Rahmen (12) beinhaltet eine Klammer (125), die Antriebs-Einheit (20) ist an der Klammer (125) angebracht,
die Klammer (125) beinhaltet:
eine Oben-Platte (1252);
eine erste Seiten-Platte (1251), die mit der Oben-Platte (1252) verbunden ist; und
eine zweite Seiten-Platte (1251), die mit der Oben-Platte (1252) verbunden ist, die zweite Seiten-Platte (1251) ist von der ersten Seiten-Platte (1251) beabstandet, wie bestimmt entlang der Links-Rechts-Richtung, mit Bezug auf das Fahrrad, **dadurch gekennzeichnet, dass** das Gehäuse (21) beinhaltet
einen ersten Aufhängungs-Ansatz (216L, 216R, 2162) und einen zweiten Aufhängungs-Ansatz (216R, 2163) die zwischen der ersten Seiten-Platte (1251) und
der zweiten Seiten-Platte (1251) angeordnet sind, wie bestimmt entlang der Links-Rechts-Richtung, mit Bezug auf das Fahrrad,
einen ersten Bolzen (60), der an dem ersten Aufhängungs-Ansatz (216L, 216R, 2162) befestigt ist, der erste Bolzen (60) ist in ein Loch (1254) eingesetzt, das in der ersten Seiten-Platte (1251) von einer Außen-Seite, wie bestimmt entlang der Links-Rechts-Richtung, mit Bezug auf das Fahrrad, vorgesehen ist,
ein Einsatz-Loch (2163) ist in dem zweiten Aufhängungs-Ansatz (216R, 2163) vorgesehen, das Einsatz-Loch (2163) erstreckt sich in der Links-Rechts-Richtung, mit Bezug auf das Fahrrad, und ist zu der zweiten Seiten-Platte (1251) offen,
einen zweiten Bolzen (62), der in ein Loch (1254) eingesetzt ist, das in der zweiten Seiten-Platte (1251) von der Außen-Seite, wie bestimmt entlang der Links-Rechts-Richtung, mit Bezug auf das Fahrrad, vorgesehen ist, wobei wenn der erste Bolzen (60) angezogen wird, bewegt sich das Gehäuse (21) zu der ersten Seiten-Platte (1251), wie bestimmt entlang der Links-Rechts-Richtung, mit Bezug auf das Fahrrad, sodass das Gehäuse (21) gegen die erste Seiten-Platte (1251) gedrückt ist,
das elektro-motor-unterstützte Fahrrad umfasst weiterhin ein zylindrisches Element (56), das zylindrische Element (56) ist in das Einsatz-Loch (2163) eingesetzt und positioniert, um gleitbar in einer Richtung, in welcher sich das Einsatz-Loch (2163) erstreckt, zu sein,
eine Schraub-Nut ist an dem Innenumfang (561A) des zylindrischen Elements (56) vorgesehen, die Schraub-Nut ist angepasst, um mit einer Verschraubung einzugreifen, die an einem äußeren Umfang des zweiten Bolzens (62) vorgesehen ist, wobei wenn der zweite Bolzen (62) angezogen wird, bewegt sich das zylindrische Element (56) in eine Richtung, von außen von dem Einsatz-Loch (2163), sodass das zylindrische Element (56) gegen die zweite Seiten-Platte (1251) gedrückt wird.

2. Ein elektro-motor-unterstütztes Fahrrad gemäß Anspruch 1, **dadurch gekennzeichnet, dass** das Gehäuse (21) beinhaltet:
ein erstes Gehäuse-Element (211); und
ein zweites Gehäuse-Element (212), das näher zu der zweiten Seiten-Platte (1251) als das erste Gehäuse-Element (211) angeordnet ist, das zweite Gehäuse-Element (212) ist an dem ersten Gehäuse-Element (211) angebracht,
der erste Aufhängungs-Ansatz (216L, 216R, 2162) ist über dem ersten und zweiten Gehäuse-Element (211, 212) angeordnet, und
der zweite Aufhängungs-Ansatz (216R, 2163) ist an dem zweiten Gehäuse-Element (212) angeordnet.

3. Ein elektro-motor-unterstütztes Fahrrad gemäß Anspruch 1, **dadurch gekennzeichnet, dass** das Gehäuse (21) beinhaltet:
ein erstes Gehäuse-Element (211); und
ein zweites Gehäuse-Element (212), das näher zu der ersten Seiten-Platte (1251) als das erste Gehäuse-Element (211) angeordnet ist,
das zweite Gehäuse-Element (212) ist an dem ersten Gehäuse-Element (211) angebracht,
der erste Aufhängungs-Ansatz (216L, 216R, 2162) ist an dem ersten Gehäuse-Element (211) angeordnet, und
der zweite Aufhängungs-Ansatz (216R, 2163) ist an dem zweiten Gehäuse-Element (212) angeordnet.

4. Ein elektro-motor-unterstütztes Fahrrad gemäß einem der Ansprüche 1 bis 3, **dadurch gekennzeichnet, dass** der erste Bolzen (60) an dem ersten Aufhängungs-Ansatz (216L, 216R, 2162) durch ein Verschraubungs-Loch (2162) befestigt ist, das in dem ersten Aufhängungs-Ansatz (216L, 216R, 2162) vorgesehen ist.

5. Ein elektro-motor-unterstütztes Fahrrad gemäß irgendeinem der Ansprüche 1 bis 3, **dadurch gekennzeichnet, dass** der erste Bolzen (60) an dem ersten Aufhängungs-Ansatz (216L, 216R, 2162) durch eine Mutter befestigt ist.

6. Ein elektro-motor-unterstütztes Fahrrad gemäß irgendeinem der Ansprüche 1 bis 5, **dadurch gekennzeichnet, dass** der erste Bolzen (60) koaxial mit dem Einsatz-Loch (2163) ist.

7. Ein elektro-motor-unterstütztes Fahrrad gemäß irgendeinem der Ansprüche 1 bis 6, **dadurch gekennzeichnet, dass** jedes von dem Einsatz-Loch (2163) und dem zylindrischen Element (56) einen größeren Durchmesser als ein Schaft des ersten Bolzens (60) hat.

8. Ein elektro-motor-unterstütztes Fahrrad gemäß irgendeinem der Ansprüche 1 bis 7, **dadurch gekennzeichnet, dass** das zylindrische Element (56) beinhaltet:
einen Körper (561), der in das Einsatz-Loch (2163) eingesetzt ist; und
einen Flansch (562), der an einem Ende des Körpers (561) vorgesehen ist, wie bestimmt entlang einer Axial-Richtung desselben, und erstreckt sich von einem äußeren Umfang des Körpers (561) in eine Richtung, senkrecht zu der Axial-Richtung des Körpers (561), und
der Flansch (562) ist gegen die zweite Seiten-Platte (1251) gedrückt.

9. Ein elektro-motor-unterstütztes Fahrrad gemäß Anspruch 8, **dadurch gekennzeichnet dass** das Gehäuse (21) einen Vorsprung (2121) beinhaltet, um den Flansch (562) zu kontaktieren, sodass der Vorsprung (2121) und der Flansch (562) in einer Umfangs-Richtung des zylindrischen Elements (56) angeordnet sind, um Drehung des zylindrischen Elements (56) zu verhindern.

## Revendications

1. Bicyclette assistée par un moteur électrique comportant :
une roue avant (14F) ;
une roue arrière (14R) située en arrière de la roue avant (14F) par rapport à la bicyclette ;
un cadre de châssis de véhicule (12) destiné à supporter la roue avant (14F) et la roue arrière (14R) ;
et une unité motrice (20) attachée au cadre de châssis de véhicule (12) pour générer une puissance motrice destinée à être transmise à la roue arrière (14R),
l'unité motrice (20) comprenant :
un boîtier (21) ; et
un axe de pédalier (22) s'étendant à travers le boîtier (21) dans une direction gauche/droite par rapport à la bicyclette,
le cadre de châssis de véhicule (12) comprenant un support (125), l'unité motrice (20) étant attachée au support (125),
le support (125) comprenant :
un panneau supérieur (1252) ;
un premier panneau latéral (1251) connecté au panneau supérieur (1252) ; et
un second panneau latéral (1251) connecté au panneau supérieur (1252), le second panneau latéral (1251) étant espacé du premier panneau latéral (1251) dans la direction gauche/droite par rapport à la bicyclette, **caractérisée en ce que** le boîtier (21) comprend
un premier moyeu de suspension (216L, 216R, 2162) et un second moyeu de suspension (216R, 2163) situés entre le premier panneau latéral (1251) et le second panneau latéral (1251) dans la direction gauche/droite par rapport à la bicyclette, un premier boulon (60) étant fixé au premier moyeu de suspension (216L, 216R, 2162), le premier boulon (60) étant inséré dans un trou (1254) formé dans le premier panneau latéral (1251) depuis l'extérieur dans la direction gauche/droite par rapport à la bicyclette,
un trou d'insertion (2163) étant prévu dans le second moyeu de suspension (216R, 2163), le trou d'insertion (2163) s'étendant dans la direction gauche/droite par rapport à la bicyclette et s'ouvrant en direction du second panneau latéral (1251),
un second boulon (62) étant inséré dans un trou (1254) formé dans le second panneau latéral (1251) depuis l'extérieur dans la direction gauche/droite par rapport à la bicyclette,
où lorsque le premier boulon (60) est serré, le boîtier (21) se déplace en direction du premier panneau latéral (1251) dans la direction gauche/droite par rapport à la bicyclette, de sorte que le boîtier (21) est poussé contre le premier panneau latéral (1251),
la bicyclette assistée par un moteur électrique comportant en outre un élément cylindrique (56), l'élément cylindrique (56) étant inséré dans le trou d'insertion (2163) et positionné de manière à pouvoir coulisser dans la direction d'extension du trou d'insertion (2163),
une rainure filetée étant prévue sur une périphérie intérieure (561A) de l'élément cylindrique (56), la rainure filetée étant adaptée pour entrer en prise avec un filetage prévu sur une périphérie extérieure du second boulon (62), où, lorsque le second boulon (62) est serré, l'élément cylindrique (56) se déplace hors du trou d'insertion (2163) de sorte que l'élément cylindrique (56) est poussé contre le second panneau latéral (1251).

2. Bicyclette assistée par un moteur électrique selon la revendication 1, **caractérisée en ce que** le boîtier (21) comprend :
un premier élément de boîtier (211) ; et
un second élément de boîtier (212) situé plus près du second panneau latéral (1251) que le premier élément de boîtier (211), le second élément de boîtier (212) étant attaché au premier élément de boîtier (211),
le premier moyeu de suspension (216L, 216R, 2162) est situé au-dessus des premier et second éléments de boîtier (211, 212), et
le second moyeu de suspension (216R, 2163) est situé sur le second élément de boîtier (212).

3. Bicyclette assistée par un moteur électrique selon la revendication 1, **caractérisée en ce que** le boîtier (21) comprend :
un premier élément de boîtier (211) ; et
un second élément de boîtier (212) situé plus près du second panneau latéral (1251) que le premier élément de boîtier (211), le second élément de boîtier (212) étant attaché au premier élément de boîtier (211),
le premier moyeu de suspension (216L, 216R, 2162) est situé sur le premier élément de boîtier (211), et
le second moyeu de suspension (216R, 2163) est situé sur le second élément de boîtier (212).

4. Bicyclette assistée par un moteur électrique selon l'une quelconque des revendications 1 à 3, **caractérisée en ce que** le premier boulon (60) est fixé au premier moyeu de suspension (216L, 216R, 2162) au moyen d'un trou fileté (2162) prévu dans le premier moyeu de suspension (216L, 216R, 2162).

5. Bicyclette assistée par un moteur électrique selon l'une quelconque des revendications 1 à 3, **caractérisée en ce que** le premier boulon (60) est fixé au premier moyeu de suspension (216L, 216R, 2162) au moyen d'un écrou.

6. Bicyclette assistée par un moteur électrique selon l'une quelconque des revendications 1 à 5, **caractérisée en ce que** le premier boulon (60) est coaxial avec le trou d'insertion (2163).

7. Bicyclette assistée par un moteur électrique selon l'une quelconque des revendications 1 à 6, **caractérisée en ce que** le trou d'insertion (2163) et l'élément cylindrique (56) ont chacun un diamètre plus grand qu'une tige du premier boulon (60).

8. Bicyclette assistée par un moteur électrique selon l'une quelconque des revendications 1 à 7, **caractérisée en ce que** l'élément cylindrique (56) comprend :
un corps (561) inséré dans le trou d'insertion (2163) ; et
une bride (562) prévue sur une extrémité du corps (561) dans sa direction axiale et s'étendant à partir d'une périphérie extérieure du corps (561) dans une direction perpendiculaire à la direction axiale du corps (561), et
la bride (562) est poussée contre le second panneau latéral (1251).

9. Bicyclette assistée par un moteur électrique selon la revendication 8, **caractérisée en ce que** le boîtier (21) comprend une saillie (2121) destinée à entrer en contact avec la bride (562) de sorte que la saillie (2121) et la bride (562) sont agencées dans une direction circonférentielle de l'élément cylindrique (56) pour empêcher une rotation de l'élément cylindrique (56).
